# EUROPEAN PATENT APPLICATION

(11) **EP 3 409 552 A1**
(43) Date of publication of application: **05.12.2018**
(21) Application number: 17173661.4
(22) Date of filing: 31.05.2017
(51) Int. Cl.: B60W 50/14, B60W 30/18, B60W 50/00

(54) **DRIVER ASSISTANCE SYSTEM, VEHICLE AND METHOD OF PROVIDING DRIVER ASSISTANCE**

(71) Applicant: Continental Automotive GmbH, 30165 Hannover (DE)
(72) Inventor: Bradbury, Melinda, Brighton, BN2 9XT (GB)
(74) Representative: Bobbert, Christiana

(57) **Abstract**

A driver assistance system (1) for a vehicle (9), wherein the driver assistance system (1) comprises: a display unit (4), at least one camera unit (8) and/or is connectable with at least one external camera unit (8), wherein the at least one camera unit (8) is adapted to record an image sequence of a road scene in front and/or at the back of the vehicle (9), and a processing and evaluation unit (2) which is adapted to receive and process the image sequence recorded by the at least one camera unit (4) and to evaluate at least one of the images of the image sequence to determine if the vehicle (9) is approaching a driver assistance required location (11), wherein the processing and evaluation unit (2) is adapted to display at least one view of the driver assistance required location (11) on the corresponding display unit (4), when it is determined that the vehicle (9) is approaching the driver assistance required location (11).

## Description

The present invention relates to a driver assistance system, a vehicle comprising said driving assistance device and a method for assisting a driver, when driving a vehicle.

### TECHNICAL BACKGROUND

Driver assistance devices for automobiles are commonly known to assist a driver. In this connection some of said driver assistance devices use cameras.

### SUMMARY OF THE INVENTION

Against this background, an objective of the present invention is to provide an improved diver assistance system, a vehicle comprising such a driver assistance system and a method providing driver assistance to a driver of a vehicle.

This objective is achieved according to the invention by a driver assistance system having the features of claim 1, a vehicle having the features of claim 9 and a method having the features of claim 11.

A driver assistance system for a vehicle, wherein the driver assistance system comprises:
a display unit,
at least one camera unit and/or is connectable to at least one external camera unit, wherein the at least one camera unit is adapted to record an image sequence of a road scene in front and/or at the back of the vehicle, and
a processing and evaluation unit which is adapted to receive and process the image sequence recorded by the at least one camera unit and to evaluate at least one of the images of the image sequence to determine if the vehicle is approaching a driver assistance required location, wherein the processing and evaluation unit is adapted to display at least one view of the driver assistance required location on the corresponding display unit, when it is determined that the vehicle is approaching the driver assistance required location.

Method of providing a driver of a vehicle with driver assistance at a driver assistance required location, wherein the method comprises the steps:
recording an image sequence of a road scene in front and/or
at the back of the vehicle by at least one camera unit,
determining that the vehicle is approaching a driver assistance required location by processing and evaluating at least one of the images of the image sequence by at least one processing and evaluation unit,
displaying at least one view of the driver assistance required location on a display unit.

The above mentioned driver assistance system and method determines if the driver approaches with his vehicle a driver assistance required location, e.g. a roundabout or a road junction etc., based on information derived from an image sequence recorded by a camera unit of a road scene in front of and/or at the back of the vehicle and displays at least one view of said driver assistance required location on a display unit to assist the driver when the driver reaches said driver assistant required location, without requiring additional speed information, gear information or trailer angle information and/or requiring that the driver has to press a button to start evaluation and processing the image sequence take by the camera unit.

The concept underlying the invention is to provide a driver, when the driver is approaching with his car a critical location, such as a roundabout etc., in which additional driver assistance is suitable, at least with a view of the critical location, such as a panoramic view or a partial view taken by a camera unit in advance, without requiring additional speed information, gear information or trailer angle information and/or requiring that the driver presses a button beforehand to start evaluation and processing the image sequence take by the camera unit. Thus, driver orientation can be enhanced based on the view of the critical location or driver assistance required location based on an image sequence of the camera unit which is automatically evaluated and processed.

Advantageous embodiments and developments of the invention emerge from the additional subordinate claims and from the description with reference to the drawings.

According to an embodiment of the invention the processing and evaluation unit is adapted to process and evaluate the at least one image sequence based on at least one location information, to determine if the vehicle is approaching a driver assistance required location. The at least one location information is for example information regarding a traffic sign, information regarding a traffic lights, road marking information, street edge information, information regarding a building, in particular regarding a position of the building, or information regarding a position of the vehicle, in particular a GPS-position information of the vehicle. Such location information can be used when evaluating a image sequence to determine if it shows a driver assistance required location or to identify a location of a vehicle or other vehicles.

In another embodiment of the invention the driver assistance system is adapted to determine at least one additional driver information to be displayed together with the at least one view of the driver assistance required location. Such driver information can include for example information regarding at least one possible trajectory, information regarding at least one possible turning direction, information regarding at least one lane marking, information regarding a speed limit, a toll information, information regarding at least one warning sign, e.g. a railway crossing warning sign, a school warning sign etc.. Information regarding possible trajectories are for example advantageous for a driver in case of a roundabout as driver assistance required location and information regarding lane markings in case of a multi-lane road as driver assistance required location.

In an embodiment of the invention the driver assistance system is adapted to determine at least one additional traffic information to be displayed together with the at least one view of the driver assistance required location. Such traffic information includes information regarding at least one overtaking possibility, information regarding a flow of traffic, or information regarding at least one crossing traffic. This has the advantage that the driver can be assisted in recognition of traffic of other vehicles or pedestrians etc. at the driver assistance required location, so that the safety of the driver and other vehicle drivers and pedestrians can be further enhanced and a more fluent flow of traffic can be achieved.

In a further embodiment of the invention the driver assistance system is adapted to switch between at least two different views of the driver assistance required location determined by the driver assistance system. According to the invention the control unit can switch based on the information, e.g., received from the processing and evaluation unit between different views displayed on the display unit. Thus, the driver can be provided for example with a panoramic view of the driver assistance required location and afterwards with an enlarged partial view of the location.

According to an embodiment of the invention the driver assistant system comprises a receiving unit to receive information from an external device. Such an external device is for example a navigation system of a vehicle, at least one sensor of a vehicle, e.g. a sensor such as a camera unit, a position sensor, a speed sensor, a gear sensor etc., a control unit of a vehicle, an processing and evaluation unit of a vehicle or an processing and evaluation unit of a server. This has the advantage that information can be used or received from other devices so that the driver assistant system can be more compact, its accuracy can be further enhanced and/or additional information such as traffic information of a traffic information service can be used.

In an embodiment of the invention the driver assistant system comprises a transmitting unit to transmit information to an external device, for example information including image sequences taken by the at least one camera unit. Thus, said information of the camera unit can be for example processed and evaluated in an external processing and evaluation unit, e.g. an external server or a processing and evaluation unit of the vehicle, including a navigation system of the vehicle.

In a further embodiment of the invention the driver assistance required location is a roundabout, a road junction, a multi-lane road, or a parking, a railway crossing, pedestrian crossing etc.

According to an embodiment of the invention a vehicle comprises such a driver assistance system. In a further embodiment of the invention, the vehicle comprises at least one sensor, e.g., a camera unit, a speed sensor, a position sensor, a gear sensor etc., a processing and evaluation unit and/or a control unit to be connectable to the driver assistance system of the vehicle in particular via a wireless interface and/or cable based interface of the driver assistance system. Thus, the driver assistance system does not require for example its own camera unit or processing and evaluation unit but can control and/or use devices of the vehicle or devices outside the vehicle such as an external server etc.. This results further in a very compact driver assistance system.

Further, according to an embodiment of the invention the method comprises the step of processing and evaluating the at least one image sequence taken by the processing and evaluation unit based on at least one location information, to determine if the vehicle is approaching a driver assistance required location. As a location information for example information regarding traffic signs and in particular their position, information regarding traffic lights and in particular their position, information regarding buildings along a road and in particular their position etc. can be used to evaluate the image sequence by the processing and evaluation unit to determine a driver assistance required location.

In another embodiment of the invention the method comprises the step of determining at least one driver information which is related to the driver assistance required location. Such driver information can retrieved, e.g., from a storing unit and/or by receiving the at least one driver information from an external device, for example a server or a navigation system of the vehicle etc..

In a further embodiment of the invention the method comprises the step of determining at least one traffic information which is related to the driver assistance required location by processing and evaluating the image sequences by the at least one processing and evaluation unit and/or by receiving at least one traffic information from an external device, for example a server or a navigation system of the vehicle etc..

According to an embodiment of the invention the method comprises the step of displaying the at least one view of the driver assistance required location together with the at least one driver information and/or the at least one traffic information. This has the advantage that the driver can be provided with additional information such as information regarding possible trajectories at a roundabout as driver assistance required location and information regarding a traffic flow and/or information regarding a crossing traffic at the roundabout.

### CONTENT OF THE DRAWINGS

The present invention is explained below in greater detail with the aid of embodiments specified in the schematic figures in the drawings. These are as follows:
- Fig. 1: a schematic illustration of a driver assistance system according to an embodiment of the invention;
- Fig. 2: a schematic view of driver assistance system as described in Fig. 1 provided inside a car and showing a view of a next driver assistance required location;
- Fig. 3: a further schematic view of the driver assistance system provided inside the car of Fig. 2 and showing a view of a next driver assistance required location; and
- Fig. 4: a flow diagram illustrating an example of a method to provide a driver with driver assistance according to an embodiment of the invention.

The accompanying drawings should convey further understanding of the embodiments of the invention. They illustrate embodiments of the invention and clarify the principles and concepts behind the invention in conjunction with the description. Other embodiments and many of the described advantages are apparent with respect to the drawings. The elements of the drawings are not necessarily illustrated true to scale in relation to each other.

In the figures in the drawing, the same elements, features and components, or those serving the same function and having the same effect, are provided with the same reference numerals in each case - unless otherwise specified.

### DESCRIPTION OF EMBODIMENTS

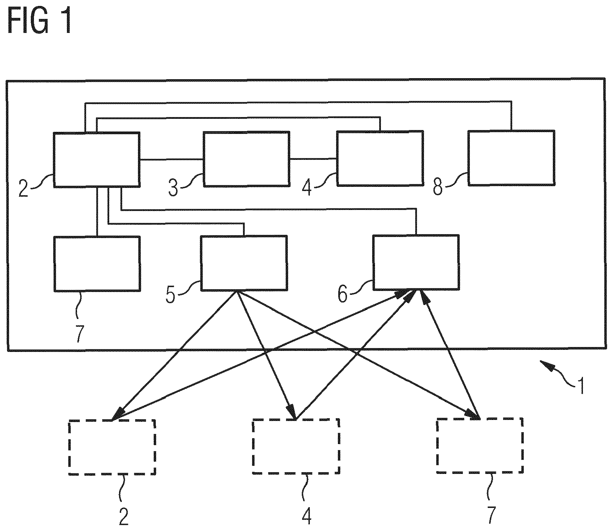

In Fig. 1 a schematic illustration of a driver assistance system 1 is shown according to an embodiment of the invention.

The driver assistance system 1 comprises a processing and evaluation unit 2, a control unit 3, a display unit 4, a transmitting unit 5, a receiving unit 6, a storing unit 7 and at least one camera unit 8. In an embodiment of the invention the driver assistance system 1 can be further adapted to be connectable via its transmitting and receiving unit 5, 6 to at least one external processing and evaluation unit and/or at least one external camera unit 8 and/or at least one external display unit 4 and/or at least one external storing unit 7. The external units are indicated in Fig. 1 by a dashed line.

Such a driver assistance system 1 is provided in a vehicle, for example a car. As shown in Fig. 1, the camera unit 8 of the driver assistance system 1 records an image sequence of a road scene in front of the car, for example a road junction, a roundabout, a parking, a multi-lane road in front of the car etc.. An additional camera unit, not shown, can be provided to record an image sequence of a road scene in the back of the car, e.g., a parking etc..

The processing and evaluation unit 2 is adapted to process and evaluate the image sequence of the road scene in front of the car and/or in the back of the car taken by the corresponding camera unit 8 to determine if the driver is approaching a driver assistance required location to provide the driver on the display unit with at least a view of the driver assistance required location, which can be one of the images of the image sequence recorded by the camera or an image or illustration of the driver assistance required location stored in advance in the storing unit 7. As will be explained in the following, at least one traffic information and /or at least one driver information can be displayed together with the view of the driver assistance required location to further assist a driver, when for example driving or parking his car.

In another embodiment of the invention the driver assistance system 1 can be connectable to an external processing and evaluation unit 2, as mentioned before. In particular the driver assistance system 1 can transmit and receive information to and from the external processing and evaluation unit 2. The evaluation of the image sequence recorded or taken by the corresponding camera unit 8 can thus be transmitted by the transmitting unit 5 from the diver assistance system 1 to the external processing and evaluation unit 2 and evaluated by the external processing and evaluation unit 2. The result of the evaluation of the image sequence by the external processing and evaluation unit 2 can then be received by the receiving unit 6 of the driver assistance system 1 and, e.g., processed or further processed and for example evaluated or further evaluated in the processing and evaluation unit 2. The external processing and evaluation unit 2 is, e.g., a navigation system of the car, an external server etc..

According to an embodiment of the invention, the corresponding camera unit 8 of the driver assistance system 1 records an image sequence of a road scene in front or in the back of the car, in particular during the driver is driving his car and/or when the driver is stopping his car, e.g. at a traffic light or adjacent a parking. In particular, the corresponding camera unit 8 can be controlled by the control unit 3 to continuously record an image sequence or to record an image sequence in predetermined time intervals or depending on a position of the car in which the car is going to approach or is going to most probably approach a possible driver assistance required location etc..

The camera unit 8 can be controlled by the control unit 3, e.g., based on the position and/or speed of the car, so that the camera unit 8 records an image sequence of a road scene, e.g., only before the driver is going to reach or is going to most probably reach a possible driver assistance required location in an embodiment of the invention. In this connection the driver assistance system 1 can comprise or can be connectable in an embodiment additionally to at least one positioning sensor (not shown) to determine the position of the car and/or at least one speed sensor (not shown) to determine directly or indirectly the speed of the car. Further, the driver assistance system 1 can additionally receive the position of the car and/or the speed of the car from the external device such as a navigation system of the car, or a control unit of the car etc.. Based on the position of the car and optionally the speed of the car the control unit 3 of the driver assistance system 1 can control in an embodiment additionally the corresponding camera unit 8, so that the camera unit 8 only records an image sequence, e.g., when the car is close to or a predetermined distance away from a possible driver assistance location such as, e.g., a roundabout, a parking, a multi-lane road or a road junction etc.

As described before, the driver assistance system 1 comprises his own display unit 4. In a further embodiment the driver assistance system 1 can be further connectable to at least one external display unit 4, such as a display unit of a navigation system of the car, or a head-up display of the car etc..

The processing and evaluation unit 2 evaluates at least one image of the corresponding image sequence taken by the corresponding camera unit 8 based on at least one location information and/or or evaluates the position and/or speed of the car to determine if the car is approaching a driver assistance required location, such as for example a road junction, a roundabout, a parking, a multi-lane road etc., or not based.

Examples of location information is for example a traffic sign information, a traffic light information, a road marking information, a street edge information, a GPS-position information of the car etc.. Such location information can be stored in the storing unit 7 of the driver assistance system 1, in particular in advance, and/or received from an external storing unit mentioned before via the receiving unit 6 of the driver assistance required system 1.

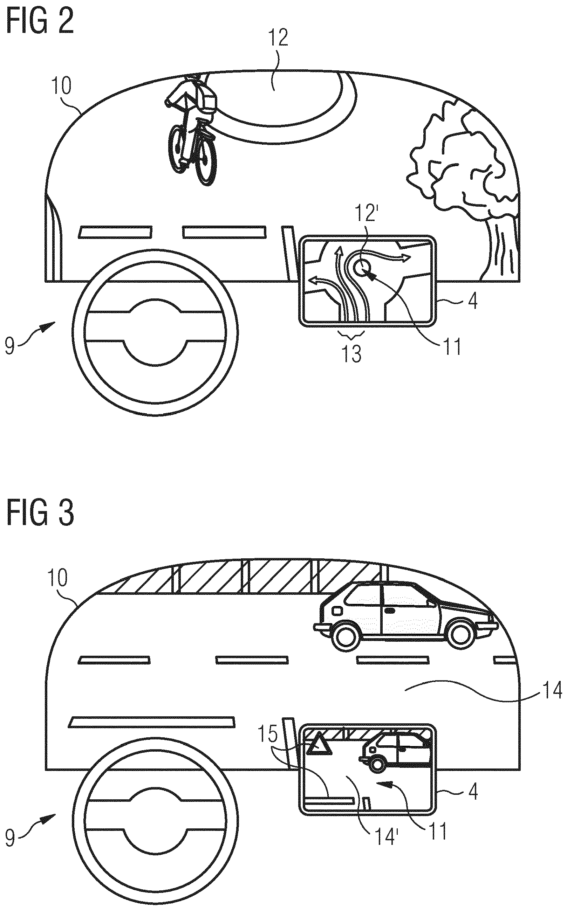

Based on the driver assistance required location determined by the processing and evaluation unit 2 a view of the driver assistance location is displayed on the display unit 4 by the control unit 3 as shown below in the examples illustrated in Figs. 2 and 3, when the driver reaches the driver assistance required location. Such views of a driver assistance required location is for example a panoramic view or a partial view etc., wherein an image or an image sequence recorded by the camera unit 8 can be used or an image or illustration stored in the storing unit or received form an external device such as a navigation system of the car. The invention is not restricted to the examples of views. Moreover, in an embodiment of the invention, not only one view of a driver assistance required location can be displayed on the corresponding display unit 4 but the control unit 3 can switch, in particular automatically switch, between different views of the driver assistance required location, e.g., between a panoramic view and a partial view. Moreover, as will be explained in the following such different views can contain different or the same additional information such as traffic information and driver information. etc.

As mentioned before views of driver assistance required locations such as roundabouts, road junctions, multi-lane roads, parking etc. can be stored, in the storing unit 7 of the driver assistance system 1 in advance and/or received from an external storing unit 7, such as a storing unit of a navigation system of the car, or a storing unit of an external server etc., or an image of an image sequence taken by the camera unit 8 can be used as view of the driver assistant required location.

In a further embodiment of the invention, optionally at least one additional driver information can be displayed together with the view of the driver assistance required location on the display unit 4. Such additional driver information includes for example possible trajectories information in case of a roundabout as driver assistance required location, possible turning directions information in case of a road junction as driver assistance required location, lane markings information in case of a multi-lane road or a parking as driver assistance required location, speed limits information, toll information etc.. However, the invention is not restricted to the examples mentioned as driver information.

Further, said driver information, e.g., at least one or more trajectories at the driver assistance required location etc., can be determined by the processing and evaluation unit 2 based on at least one image recorded by the camera unit 4, can be stored in the storing unit 7 of the driver assistance system 1 and retrieved by the processing and evaluation unit and/or can be derived from an external driver information unit 2 such as a navigation system of the car, an external server providing such driver information etc.. In particular, images of the image sequence recorded by the camera unit 8 can be evaluated and processed by the processing and evaluation unit 2 to determine suitable or tailor-made driver information such as possible trajectories at a roundabout as driver assistance required location etc.. Thus, the driver information can be customized to the drivers needs based on the image sequence recorded by the camera unit 8. However, such driver information can be also pre-stored in the storing unit 7 or can be queried by the processing and evaluation unit 2 based on a driver assistance required location from an external device etc.. The same applies to additional traffic information described in the following.
In a further embodiment of the invention, at least one additional traffic information can be displayed together with at least the view of the driver assistance required location on the display unit 4.

Such additional traffic information can include for example information concerning overtaking possibilities, information concerning a flow of traffic, crossing traffic information, e.g., information regarding crossing vehicles such as cars, bicycles, motorbikes, mopeds, truck, trains etc., information regarding crossing pedestrians including children and adults, and/or information regarding crossing animals such as cats, dogs, wild animals in particular roes, deer and boars crossing the driver assistance location.

Said traffic information can be received by evaluating the image sequence of the corresponding camera unit 8 by the processing and evaluation unit 2 and/or by receiving traffic information from an external traffic information device, such as a navigation system of a car or an external server, e.g. a radio etc., providing for example a traffic warning service received by the receiving unit 6.

To determine traffic information, the processing and evaluation unit 2 is optionally capable of evaluating the corresponding image sequence taken by the corresponding camera unit 8 based on information regarding the position, speed and/or direction of one or more vehicles, one or more pedestrians, and/or one or more animals at the driver assistance required location, lane markings, road edge markings etc. and/or receives at least one information regarding the position, speed and/or direction of one or more vehicles, one or more pedestrian, and/or one or more animals at the driver assistance required location, lane marking information, road edge marking information etc. from the at least one external traffic information device, when the driver assistance systems 1 determines that the driver is approaching a driver assistance required location.

Based on said information at least one traffic information, e.g., information regarding overtaking possibilities, information regarding a flow of traffic, information regarding a crossing traffic, e.g., crossing vehicles, crossing pedestrians, crossing animals, crossing the driver assistance location can be determined and displayed as traffic information together with the view of the driver assistance required location.

The control unit 3 can display on the display unit 8 together with a view of the driver assistance required location determined by the processing and evaluation unit 2 optionally at least one traffic information and/or at least one driver information.

As mentioned before to receive and transmit information the driver assistance system comprises the transmitting unit 5 and the receiving unit 6 to transmit and receive information. The information can be transmitted and received wirelessly and/or by cable. The driver assistance system 1 can comprise at least one wireless interface, e.g. a bluetooth interface, a radio interface, an infrared interface etc.. Further, the driver assistance system 1 can comprise at least one cable based interface or wired interface, e.g., an USB interface etc..

In Fig. 2 a schematic view of driver assistance system 1 as described before with respect to Fig. 1 is shown, wherein the driver assistance system 1 is arranged inside a car 9. As can be derived from Fig. 2, the view of the driver through the windshield 10 of his car 9 is illustrated and a view of a driver assistance required location is displayed on a display unit 4 of the driver assistance system 1.

As shown in Fig. 2, the driver has reached a roundabout 12 as an example of a driver assistance required location 11. Before approaching the roundabout 12, the camera unit of the driver assistance systems 1 already records an image sequence of the road scene in front of the car. The processing and evaluation unit evaluated the image sequence recorded be the corresponding camera unit and/or received a result of an external processing and evaluation unit and determined that the driver assistance required location 11 is in the present case the roundabout 12.

In the example illustrated in Fig. 2, the processing and evaluation unit displays a view of the driver assistance required location including an image of the roundabout 12' as driver assistance required location and additional driver information 13, i.e., possible trajectories at the roundabout, on the display unit 4.

Further, in Fig. 3 a schematic view of driver assistance system 1 as described before with respect to Fig. 1 and 2 is shown, wherein the driver assistance system 1 is arranged inside the car 9. As can be derived from Fig. 3, the view of the driver through the windshield 10 of the car 9 is illustrated and a view of another or next driver assistance required location is displayed on the display unit 4 of the driver assistance system 1.

As shown in Fig. 3, the driver has now reached a road junction 14 as a further example of a driver assistance required location 11.

Before approaching the road junction 14, the camera unit of the driver assistance systems 1 already recorded an image sequence of the new road scene in front of the car 9. The processing and evaluation unit evaluated the image sequence recorded be the corresponding camera unit and/or received a result of an external processing and evaluation unit and determined the road junction 14 based on the result of the corresponding processing and evaluation unit as new driver assistant required location 11.

In the example illustrated in Fig. 3, the processing and evaluation unit displays on the display unit 4 a view including an image of the roundabout 14' and additional traffic information 15, i.e., an image of crossing pedestrians crossing the road junction.

In a further embodiment of the invention, the driver assistance system 1 can provide an additional acoustic warning signal in case of traffic information such as information regarding crossing pedestrians, crossing vehicles, crossing animals etc. and/or driver information.

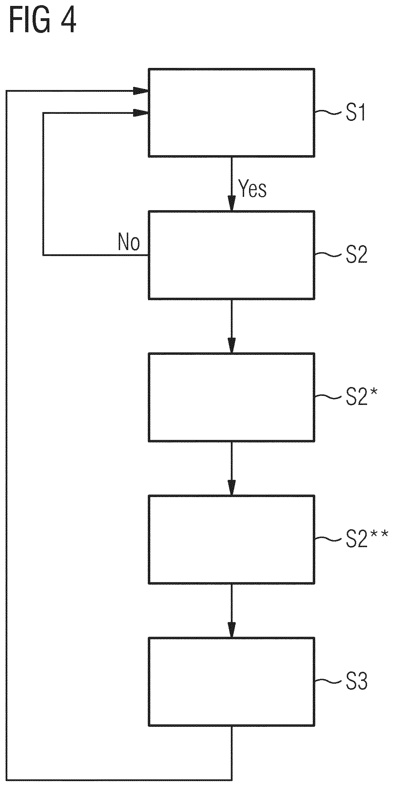

In Fig. 4 an example of a flow diagram is shown illustrating a method of providing a driver with driver assistance based on the inventive driver assistance system.

In a first *Step S1,* the camera unit of the driver assistance system and/or optionally an external camera unit connected with the driver assistance device records an image sequence of a road scene, for example a road scene in front of the car or in the back of the car, in particular during the driver is driving or when the driver stops, e.g. at a traffic light, roundabout, crossing etc..

The processing and evaluation unit of the driver assistance device and/or optionally an external processing and evaluation unit which is connected with the driver assistance device processes and evaluates in a next *Step S2* the image sequence of the corresponding camera unit to determine if the car is approaching a driver assistance required location, i.e. *Step S2: Yes,* or not, *Step S2: No.*

If no driver assistance required location is determined by the processing and evaluation unit, i.e. *Step S2: No,* the flow diagram returns to *Step S1* and a further image sequence is recorded or the recording of the image sequence is continued by the corresponding camera unit and processed and evaluated in subsequent *Step S2.*

If the processing and evaluation unit determines a driver assistance required location, i.e. *Step S2: Yes,* then in an embodiment of the invention a view of the driver assistance required location can be immediately or directly displayed on the display unit of the driver assistance system without requiring an additional input by the driver or an additional speed information, gear information or trailer angle information.

As mentioned before with respect to Fig. 1 the display unit can be part of the driver assistance system and/or optionally the driver assistance system can be connected to an external display unit, such as a head-up display or a display unit of a navigation system of the car. Regarding the assistance required location a view of the assistance required location, e.g. a panoramic view, a partial view or a view tailored to the curvature of the road junction in case of a road junction as assistance required location, is displayed on the display unit.

In another embodiment of the invention as illustrated in Fig. 4, optionally at least one additional driver information can be displayed together with the view of the driver assistance required location on the display unit. As mentioned before, such additional driver information includes for example information regarding possible trajectories in case of a roundabout as driver assistance required location, information regarding possible turning directions in case of a road junction as driver assistance required location, lane marking information in case of a multi-lane road or a parking information as driver assistance required location, speed limit information, toll information etc..

Therefore in the embodiment shown in Fig. 4 the flow diagram continues to next *Step S2**. In *Step S2** the control unit of the driver assistance system determines based on the driver assistance required location whether at least one additional driver information is available, e.g., stored in a storing unit of the driver assistance system, is determined by evaluation and processing of at least one image of the image sequence and/or is received from an external driver information unit such as a navigation system of the car, an external server providing such driver information etc.. If yes the additional driver information such as, e.g., information regarding possible trajectories, information regarding lane markings, information regarding possible turning directions etc. can be displayed in an embodiment of the invention together with the view of the driver assistance required location on the display unit in *Step S3.* If not, then the view of the driver assistance required location can be displayed on the display unit without additional driver information in *Step S3.*

In a subsequent step, i.e. *Step S2***, as illustrated in the embodiment in Fig. 4, the control unit of the driver assistance system determines based on the driver assistance required location whether at least one additional traffic information is available and/or can be determined by the evaluation and processing of at least one image of the image sequence by the evaluation and processing unit. If yes, the at least one additional traffic information can be displayed together with the view of the driver assistance required location on the display unit in *Step S3.* If no, the view of the driver assistance required location is displayed without any additional traffic information in *Step S3.* However as mentioned before, the view of the driver assistance required location can be displayed with additional driver information in case in *Step S2**, driver information has been determined.

According to the invention as described with respect to Figs. 1 to 4 the view of a driver assistance required location is automatically displayed on the corresponding display unit by the driver assistance system and thus does not require an input of the driver, such as pressing a button that he requires driver assistance. In a preferred embodiment it is further automatically switched between different views of the driver assistance required location, e.g. a panoramic view and a partial view, when the driver assistance required location is determined by the display unit. This is also done without requiring input of the driver or an additional speed information, gear information or trailer angle information. This also applies in case at least one additional traffic information and/or at least one additional driver information is determined by the driver assistance system. Said information, if available, is automatically displayed by the driver assistance system together with a corresponding view of the driver assistance required location on the display unit.

As mentioned before, such additional traffic information can include for example information regarding a flow of traffic, e.g., information regarding crossing traffic, information regarding possible trajectories in case of a multi-lane traffic driving, information regarding overtaking possibilities in case of a multi-lane traffic driving etc.. However, the invention is not restricted to the examples for traffic information and driver information.

According to the invention as described before with respect to Figs. 1 to 4 and the embodiments, the camera units used are able to make a full or partial view of the road layout and/or receive a corresponding input from external systems and external devices, respectively. The invention uses scene information such as edge information and road marking information to determine the type of junction, parking situation etc. that the driver must negotiate. It then uses this information to determine what is appropriate to show the driver. The invention as described includes applications, but is not limited to switching on and showing front crossing traffic detection on approach to a road junction such as, e.g., a T-junction; switching on and showing rear crossing traffic detection when reversing round a corner; switching to a panoramic view that is appropriate to the type of junction/situation, even tailored to the curvature of that junction; when stopped parallel to a parked car showing guidance lines and views for parallel park in appropriate direction; when approaching a roundabout showing flow of traffic; when approaching multi-lane crossroads, roundabouts, showing lane marking and/or possible trajectory information. Further, in multi-lane traffic direction the driver assistance system shows assistance for overtaking possibilities.

In particular the invention described before with reference to Figs. 1 to 4 use camera units to identify junctions etc. as driver assistant required location and provides automatic anticipation of driver needs based on road layout and situation, respectively. A panoramic view can be provided for a junction and/or panoramic parameters dependent on the curvature of the junction and situation, respectively, and/or a roundabout view.

Although the present invention has been fully described above by means of preferred embodiments, it is not limited to the above, but may be modified in a number of ways.

### LIST OF REFERENCE NUMERALS

- 1: driver assistance system
- 2: processing and processing and evaluation unit
- 3: control unit
- 4: display unit
- 5: transmitting unit
- 6: receiving unit
- 7: storing unit
- 8: camera unit
- 9: car
- 10: windshield
- 11: driver assistance required location
- 12: roundabout
- 12': image of roundabout
- 13: driver information
- 14: road junction
- 14': image of road junction
- 15: traffic information

## Claims

1. A driver assistance system (1) for a vehicle (9), wherein the driver assistance system (1) comprises:
a display unit (4),
at least one camera unit (8) and/or is connectable with at least one external camera unit (8), wherein the at least one camera unit (8) is adapted to record an image sequence of a road scene in front and/or at the back of the vehicle (9), and
a processing and evaluation unit (2) which is adapted to receive and process the image sequence recorded by the at least one camera unit (4) and to evaluate at least one of the images of the image sequence to determine if the vehicle (9) is approaching a driver assistance required location (11), wherein the processing and evaluation unit (2) is adapted to display at least one view of the driver assistance required location (11) on the corresponding display unit (4), when it is determined that the vehicle (9) is approaching the driver assistance required location (11).

2. The driver assistance system according to claim 1,
wherein the processing and evaluation unit (2) is adapted to evaluate the at least one image of the image sequence based on at least one location information, to determine if the vehicle (9) is approaching a driver assistance required location (11), wherein the at least one location information is a traffic sign information, a traffic light information, a road marking information, a street edge information, a building information, or a position information of the vehicle, in particular a GPS-position information of the vehicle (9).

3. The driver assistance system according to claim 1 or 2, wherein the driver assistance system (1) is adapted to determine at least one additional driver information (13) to be displayed together with the at least one view of the driver assistance required location (11), wherein the additional driver information (13) includes at least one possible trajectory information, at least one possible turning direction information, at least one lane marking information, a speed limit information, a toll information, at least one warning sign information in particular railway crossing warning sign information.

4. The driver assistance system according to any of the preceding claims, wherein the driver assistance system (1) is adapted to determine at least one additional traffic information (15) to be displayed together with the at least one view of the driver assistance required location (11), wherein the traffic information (15) includes at least one information regarding overtaking possibilities, information regarding a flow of traffic, or at least one information regarding crossing traffic.

5. The driver assistance system according to any one of the preceding claims, wherein the driver assistance system (1) is adapted to switch between at least two different views of the driver assistance required location (11) determined by the driver assistance system (1), and wherein the driver assistance system (1) is adapted to preferably automatically display the view or views of the driver assistance required location (11) on the display unit (4), when the processing and evaluation unit (2) has determined that the vehicle (9) is approaching the driver assistance required location (11).

6. The driver assistance system according to any one of the preceding claims, wherein the driver assistance system (1) comprises a receiving unit (6) adapted to receive information from an external device, in particular a navigation system of a vehicle, at least one sensor of a vehicle including a control unit of a vehicle, a processing and evaluation unit of a vehicle or a processing and evaluation unit of a server.

7. The driver assistance system according to any one of the preceding claims, wherein the driver assistance system (1) comprises a transmitting unit (5) adapted to retransmit information to an external device, in particular information including at least one image of the image sequence recorded by the at least one camera unit.

8. The driver assistance system according to any one of the preceding claims, wherein the driver assistance required location (11) is a roundabout (12), a road junction (14), a multi-lane road, or a parking lot.

9. A vehicle (9) comprising a driver assistance system (1) according to any of the preceding claims 1 to 8.

10. The vehicle according to claim 9, wherein the vehicle (9) comprises at least one sensor, in particular a camera unit (4), a processing and evaluation unit (2) and/or a control unit (3) connectable to the driver assistance system (1), in particular via a wireless interface and/or cable based interface.

11. A method of providing a driver of a vehicle (9) with driver assistance at a driver assistance required location (11), preferably by a driver assistance system (1) as claimed in any of claims 1 to 8,
wherein the method comprises the steps:
recording an image sequence of a road scene in front and/or at the back of the vehicle (9) by at least one camera unit (4),
determining that the vehicle (9) is approaching a driver assistance required location (11) by evaluating at least one of the images of the image sequence by at least one processing and evaluation unit (2),
displaying at least one view of the driver assistance required location (11) on a display unit (4), preferably automatically, when it is determined that the vehicle (9) is approaching the driver assistance required location (11).

12. The method according to claim 10, wherein the method comprises evaluating the at least one image of the image sequence by the processing and evaluation unit (2) based on at least one location information, to determine if the vehicle (9) is approaching a driver assistance required location (11).

13. The method according to claim 10 or 11, wherein the method comprises the step of determining at least one driver information (13) which is related to the driver assistance required location (11) by retrieving the at least one driver information (13) from a storing unit (2) or by receiving the at least one driver information (13) from an external device, in particular a server or a navigation system of the vehicle (9).

14. The method according to claim 10, 11, 12 or 13, wherein the method comprises the step of determining at least one traffic information (15) which is related to the driver assistance required location (11) by evaluating the image sequence by the at least one processing and evaluation unit (2) based on at least one traffic information, and/or by receiving at least one traffic information (15) from an external device, in particular a server or a navigation system of the vehicle (9).

15. The method according to claim 10, 11, 12, 13 or 14, wherein the method comprises the step of displaying the at least one view of the driver assistance required location (11) together with the at least one driver information and/or the at least one traffic information.
